(19) Europäisches Patentamt
European Patent Office
Office européen des brevets

(11) **EP 2 023 601 A1**

(12) **EUROPEAN PATENT APPLICATION**

(43) Date of publication:
**11.02.2009 Bulletin 2009/07**

(51) Int Cl.:
***H04N 1/60*** *(2006.01)*

(21) Application number: **07301278.3**

(22) Date of filing: **27.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing
92100 Boulogne-Billancourt (FR)**

(72) Inventors:
• **Stauder, Jürgen**
**35440 Montreuil/Ille (FR)**
• **Correa, Carlos**
**78056 Villingen-Schwenningen (DE)**
• **Endress, Wolfgang**
**78050 VILLINGEN-SCHWENNINGEN (DE)**

• **Hille, Andreas**
**78048 VILLINGEN (DE)**
• **Dozer, Ingo**
**78166 Donaueschingen (DE)**
• **Blonde, Laurent**
**35235 THORIGNE-FOUILLARD (FR)**
• **Morvan, Patrick**
**35890 LAILLE (FR)**
• **Lee, Bongsun**
**La Crescenta, CA 91214 (US)**

(74) Representative: **Ruellan-Lemonnier, Brigitte
Thomson multimedia
Patent Department
46 Quai A. Le Gallo
92648 Boulogne Cedex (FR)**

(54) **Method of color mapping taking into account distribution of colors of interest**

(57) Method of mapping source colors of a source color device into target colors of a target color device, comprising :
- a pre-mapping step to get a distribution of pre-mapped colors that is closer to a constant color distribution than a source distribution $f_S(u)$ of source colors of interest, and/or

- a post-mapping step to get a distribution of the post-mapped colors that is closer to a target distribution $f_T(u)$ of target colors of interest than a constant color distribution.

Importance, quality and/or occurrence of colors can then be taken into consideration for the mapping, on the source side as on the target side.

Fig.5

EP 2 023 601 A1

**Description**

The invention relates to a method of mapping a set of source colors of a source color device into a set of target colors of a target color device.

Gamut mapping is used to reproduce an image defined with respect to a source color device on a target color device, since the source device and the target device typically have different gamut boundaries with respect to each other. In other words, the gamut of colors that can be reproduced by the source device is typically not the same as the gamut of colors that can be reproduced by the target device. Gamut mapping can be used to render the image from within the source device gamut boundary to within the target device gamut boundary, so as to more accurately reproduce the color image on the target device.

The term "color gamut" or gamut generally is used to describe the complete range of colors an image contains or a color device is able to render. It is sometimes referred to as a color gamut or the gamut color space associated, for instance, with a printer or screen display device. Gamut mapping an image for instance onto a screen or printer generally requires adjusting the colors of the image to fit in the constrained color gamut of the screen or printer. In some cases, the image being displayed does not have a wide range of colors and therefore does not fill or utilize the wider range of colors in the printer gamut or even the screen gamut. New technologies in capturing and displaying wide gamut images and new standards for wide gamut color encoding raise the question of compatibility between today's (legacy) content distribution channels and upcoming wide gamut content creation, distribution and display. One obstacle for adopting wide gamut content in creation can be the backward compatibility of wide gamut content to displays with smaller gamut such as the standard referenced ITU-R BT.709.

A color gamut may contain all colors that can be reproduced by a specific display or printing device or that can be transmitted or stored when using for instance a specific medium or standard. A color gamut can also be used to characterize all colors that occur in an image or in a video. Cameras, palm tops, cell phones, Internet terminals and digital picture frames generate images using specific color gamuts in YCC, xvYCC, Adobe RGB, bgRGB, scRGB, CIELAB, e-sRGB or ROMM digital representations.

Gamut mapping of image data from a source color gamut to a target color gamut is typically performed using a gamut mapping algorithm ("GMA"), which is a particular method of mapping color data between gamuts. A gamut mapping algorithm often makes use of data that defines the boundaries of the color gamut of the source and the target color devices, in order to obtain a reference between the two gamuts for appropriate gamut mapping of the image. Such data defining the gamut color boundary can be referred to as a gamut boundary description ("GBD"). See for instance US2007/081176.

Gamut mapping algorithms that are very common colors map colors along mapping trajectories in the mapping color space. These mapping trajectories are often straight lines. All such mapping lines generally converge to a single or to multiple so called anchor points. These anchor points can be chosen according to the shape of the source and destination gamuts such as described by Montag and Fairchild in their paper entitled "Gamut mapping: Evaluation of chroma clipping techniques for three destination gamuts" published in 1998 at the IS&T/SID Sixth Color Imaging Conference in Scottsdale. The way how the color is moved along such mapping trajectories can be various. Simple mapping algorithms clip all colors that are outside the target gamut onto the target gamut surface along the mapping trajectories. More complex mapping algorithms compress linearly all colors along the mapping trajectories by linear scaling such that they keep on the same mapping trajectories but are all inside the destination gamuts. Still more complex, non-linear parametric functions apply specific, sometimes piece-wise defined scaling operations to the colors to move them along the defined lines inside the target gamut. For example, Braun and Fairchild suggest in their publication entitled "Image Lightness Rescaling Using Sigmoidal Contrast Enhancement Functions" published in 1999 in the Proceedings of SPIE Electronic Imaging Conference (Elí99) a non-linear, S-shaped function.

When mapping colors from a source gamut into a destination gamut, the above cited papers use straight lines as mapping trajectories and mapping functions that define how far a color on a line needs to be moved along the mapping trajectories. The mapping trajectories and mapping functions can be fixed or adapted to the source and target gamut boundaries.

Generally, a set of source colors to map generally comprises colors that are known a-priori to be more important and other colors that are known to be less important. For example, these colors may just be more frequent and less frequent, respectively, according to there occurrence in the set of source colors to map. They may be more important for the Director of Photography or less important, respectively, then making a source color distribution taking into account this importance. For example, skin tones are often more important than other colors. The source color distribution should then be raised for such colors. It may be colors that are more or less visible by the human eye, respectively, then making another source color distribution taking into account the visibility of the colors. For example, differences in dark blue colors are less visible than for other colors. The source color distribution should then be reduced for such colors.

Generally, as in the cases described above, known gamut mapping algorithms or mapping functions are adapted to the shape of the gamut boundaries but not to a distribution of a set of colors inside the gamut boundaries. It may happen that frequent or important or very visible colors that form a given set of specific interest, with a given distribution, are modified a lot during mapping and thus generate annoying artifacts. This set of colors of specific interest is often far larger that the source colors to map. The distribution of the colors inside this set of interest may be based on the occurrence of each color in said set, on the importance of each color, or on the visibility of each color, or a combination of different criteria. Known gamut mapping algorithms have no means to control, limit or shape such annoying artifacts. In cases of important differences between source gamut and target gamut, the resulting content of mapped colors may even be unacceptable.

The patent US6128407 partially addresses this problem. Claim 1 of this patent proposes to calculate the distribution of the source colors to map in a color space and in the 2D image space and then to determine from this one or more color reproduction parameters, for example for a gamut compression method (see claim 7).

In a similar way, the patent US7064864 proposes in claim 2 to analyze a distribution pattern of data of a (source) image to be displayed, for example tone distribution or saturation distribution (claim 3). The pattern is used to determine from this a color gamut compression method.

Unfortunately, neither US6128407 nor US7064864 do consider both a given distribution of source colors of interest and a given distribution of target colors of interest in order to avoid the aforementioned annoying artifacts. US6128407 just considers the color reproduction range of the target device (see claim 1).

The patent application US2006072133 proposes in its claim 1 to provide a plurality of destination (target) gamuts (gamut boundary descriptions) and to choose an appropriate one based on a desired target for gamut mapping. Unfortunately, US2006072133 does not specify any link between those multiple gamuts and a specific distribution of target colors of interest.

An object of the invention is to avoid the aforementioned drawbacks, particularly the aforementioned annoying artefacts.

The subject of the invention is a method of mapping, in a mapping color space, source colors of a source color device into target colors of a target color device, comprising a first step of pre-mapping source colors into first intermediate colors, a second step of main-mapping first intermediate colors into second intermediate colors, and a third step of post-mapping second intermediate colors into target colors,
wherein,

- if a set of source colors of interest is defined with a given source distribution $f_S(u)$, and/or if a set of target colors of interest is defined with a given target distribution $f_T(u)$,
- if the distribution $f_S(u)$ of the source colors of interest is not constant, said pre-mapping of the first step is adapted to get a distribution of the pre-mapped first intermediate colors that is closer to a constant color distribution than said given source distribution $f_S(u)$ of the source colors of interest,
- if the distribution of the second intermediate colors is constant, said post-mapping is adapted to get a distribution of the post-mapped colors that is closer to said given target distribution $f_T(u)$ of the target colors of interest than a constant color distribution.

A very usual mapping color space is the CIE L*a*b* space. Other spaces such as CIE XYZ space or appearance-based spaces such as JCh according to CIECAM-02 or any other space could be used.

Source colors are distributed into the actual source color gamut according, for instance, to their occurrence, to their importance, or to their quality of reproduction, or a combination thereof. Similarly, target colors are distributed into the actual target color gamut according, for instance, to their occurrence, to their importance, or to their quality of reproduction, or a combination thereof.

When the color distribution of the set of source or target colors reflects color importance, for instance, an operator defines a-priori the importance of colors in color space, then, many colors are chosen in areas of the color space where the colors are important and less in areas where the colors are less important.

When the color distribution of the set of source or target colors may reflect color quality, for instance, an operator defines a-priori the quality of colors in color space, by considering the quality of color reproduction of a specific display device. Then, many colors are chosen in areas of the color space where the quality is high and less in areas where the quality is lower.

The mapping method according to the invention improves upon the prior art mapping methods by providing some of the following advantages :

- During content creation, color gamut mapping can be controlled using hierarchically organized systems of source and target gamut boundary descriptions representing color importance;
- During content distribution, color gamut mapping can be controlled using hierarchically organized systems of source and target gamut boundary descriptions expressing color probability or distribution;
- During content reproduction on a display, color gamut mapping can be controlled using hierarchically organized systems of source and target gamut boundary descriptions quantifying color quality.

Preferably :

- according to said given source colors distribution $f_S(u)$, source colors of interest are distributed into a plurality of hierarchically organized source gamut boundary descriptions (GBD-S$_1$, GBD-S$_2$, ..., GBD-S$_j$, ..., GBD-S$_J$) of the said source color device, enclosing respectively a cumulative probability ($P_{S,1} < P_{S,2} < ... < P_{S,j} < ... < P_{S,J}$) of said source colors, where, whatever is j such that $1 \leq j \leq$ J-1, then GBD-S$_j$ is included into GBD-S$_{j+1}$;
- according to said given target colors distribution $f_T(u)$, target colors of interest are distributed into a plurality of hierarchically organized target gamut boundary descriptions (GBD-T$_1$, GBD-T$_2$, ..., GBD-T$_{j'}$, ..., GBD-T$_{J'}$) of the said target color device, enclosing respectively a cumulative probability ($P_{T,1} < P_{T,2} < ... < P_{T,j'} < ... < P_{T,J'}$) of said target colors, where, whatever is j' such that $1 \leq j' \leq$ J'-1, then GBD-T$_{j'}$ is included into GBD-T$_{j'+1}$.

For instance, if the distribution of the source colors of interest corresponds to their occurrence in the actual color gamut of the source color device, if J=3, if $P_{S,1}$= 75% , $P_{S,2}$ = 95%, $P_{S,3}$ = 100%, then GBD-S$_1$ includes 75% of the most frequent source colors, GBD-S$_2$ includes 95% of the most frequent source colors, and GBD-S$_3$ includes 100% of the source colors. The same example applies to the distribution of the target colors of interest.

Preferably, said pre-mapping, main-mapping and post-mapping steps are all performed along mapping trajectories in reference with anchor points, and :

- for the first step of pre-mapping, for each mapping trajectory associated with an anchor point, a cumulative source color distribution function $F_S(\rho_S)$ is calculated as a monotonous function of the distance $\rho_S$, measured from said anchor point, of a source color belonging to said mapping trajectory such that, at the intersection of said mapping trajectory with any said source gamut boundary descriptions (GBD-S$_j$) associated with its cumulative probability $P_{S,j}$, then $F_S(\rho_{S\text{-inter-GBD-sj}}) = P_{S,j}$;
- for the third step of post-mapping, for each mapping trajectory associated with an anchor point, a cumulative target color distribution function $F_T(\rho_T)$ is calculated as a monotonous function of the distance $\rho_T$, measured from said anchor point, of a target color belonging to said mapping trajectory such that, at the intersection of said mapping trajectory with any said target gamut boundary descriptions (GBD-T$_{j'}$) associated with its cumulative probability $P_{T,j'}$, then $F_T(\rho_{T\text{-inter-GBD-Tj'}}) = P_{T,j'}$.

Mapping trajectories may be straight lines in the mapping color space, but other types of trajectories can be used. Other types include trajectories defined by rational non-linear functions, exponential functions, mathematical parametric closed functions in general, functions defined by numerical data, or any other type of trajectories.

Preferably, for each source color to map into a target color along a mapping trajectory with reference to an anchor point, then, if all distance of colors are measured with reference to this anchor point along mapping trajectory :

- during the pre-mapping step, said source color with a distance $\rho_S$ is pre-mapped along said mapping trajectory into a first intermediate color with a distance $\rho'_S$, such that $\rho_S' = F_S(\rho_S) \times \rho_{S,max}$, where $\rho_{S,max} = \rho_{S\text{-inter-GBD-SJ}}$ corresponds to the distance of the color located at the intersection of said mapping trajectory with the largest source gamut boundary description (GBD-S$_J$),
- during the main-mapping step, said first intermediate color with a distance $\rho'_S$ is main-mapped along said mapping trajectory into a second intermediate color with a distance $\rho_T$,
- during the post-mapping step, the second intermediate color with a distance $\rho_T$ is post-mapped along said mapping trajectory into a target color with a distance $\rho'_T$, such that : $\rho_T' = F_T^{-1}\left( \dfrac{\rho_T}{\rho_{T,\max}} \right)$, where $\rho_{T,max} = \rho_{T\text{-inter-GBD-TJ'}}$

corresponds to the distance of the color located at the intersection of said mapping trajectory with the largest target gamut boundary description (GBD-T$_{J'}$), and where $F_T^{-1}$ is the inverse function of the cumulative target color distribution function $F_T(\rho_T)$.

The invention will be more clearly understood on reading the description which follows, given by way of non-limiting example and with reference to the appended figures in which:

- Figure 1 shows the hierarchically organized set of source gamut boundary descriptions that is used to calculate the cumulative source color distribution function that is used for the pre-mapping step of the mapping method summarized on figure 5;

- Figure 2 illustrates the cumulative source color distribution function that is obtained from the hierarchically organized set of source gamut boundary descriptions of figure 1;
- Figure 3 illustrates the pre-mapping step of the mapping method summarized on figure 5;
- Figure 4 illustrates the post-mapping step of the mapping method summarized on figure 5;
- Figure 5 summarizes the mapping method according to an embodiment of the invention.

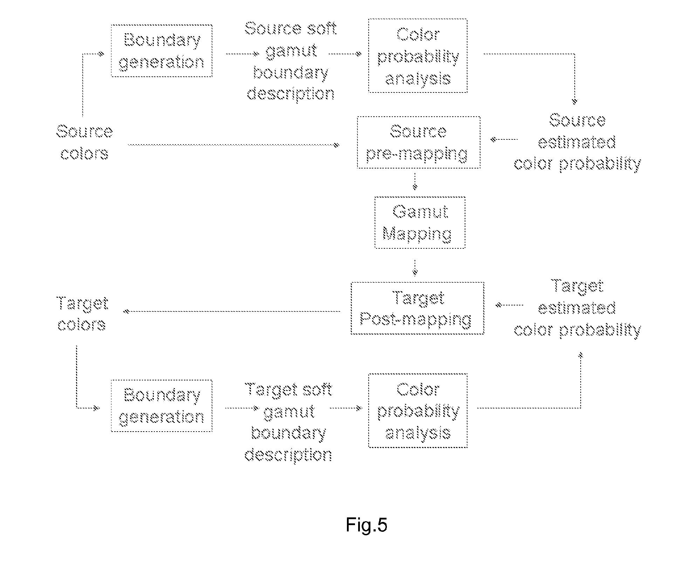

An embodiment of the mapping method according to the invention will now be described, that is summarized on figure 5.

In this embodiment, the mapping color space is CIE L*a*b* space. Furthermore, the shown implementation concerns a hue-preserving gamut mapping. This means that the mapping is not carried out in three dimensions in L*a*b* space but in two dimensions in L*C* space while C* is calculated according to the formula $C* = \sqrt{a*^2 + b*^2}$

and represents the chroma of a color. The higher the C* value the more saturated is the color. Instead of using in L*C* space, other two-dimensional or three-dimensional color spaces can be used, for example L*a*b* space or xy color space as defined by the CIE.

The mapping method comprises a first step of pre-mapping source colors into first intermediate colors, a second step of main-mapping first intermediate colors into second intermediate colors, and a third step of post-mapping second intermediate colors into target colors. For each of these steps, colors are mapped along mapping trajectories in reference with anchor points. In this embodiment, mapping trajectories are straight lines in the mapping color space.

**1 - Definition of a set of source colors of interest with its specific distribution, and of a set of target colors of interest with its specific distribution:**

A set of source colors of interest is defined as all the source colors that are included in the different images to map that belong to a same video sequence ; the source colors that form this set do not need to be identical to the source colors to be mapped. A specific distribution of these source colors is defined with its color distribution $f_S(u)$ which is based on the occurrence of each color within this set; other functions may be considered as a distribution based on a combination of different criteria as, for instance, the occurrence of each color of this set, the importance which is given to each color of this set, the visibility of each color of this set and the color reproduction quality on a source color device - for example in terms of quantization or distortion.

Similarly, a set of target colors of interest is defined as all the target colors that should preferably be included in the different mapped images that will form the new video sequence ; the target colors that form this set do not need to be identical to the mapped target colors. A specific distribution of these target colors is defined with its color distribution $f_T(u)$ which is based on the occurrence of each color within this set; other functions may be considered as a distribution based on another combination of different criteria as, for instance, the occurrence of each color of this set, the importance which is given to each color of this set, the visibility of each color of this set and the color reproduction quality on a target color device - for example in terms of quantization or distortion.

**2 - Generation of a hierarchically organized set of source gamut boundary descriptions : GBD-S$_1$, GBD-S$_2$, GBD-S$_3$.**

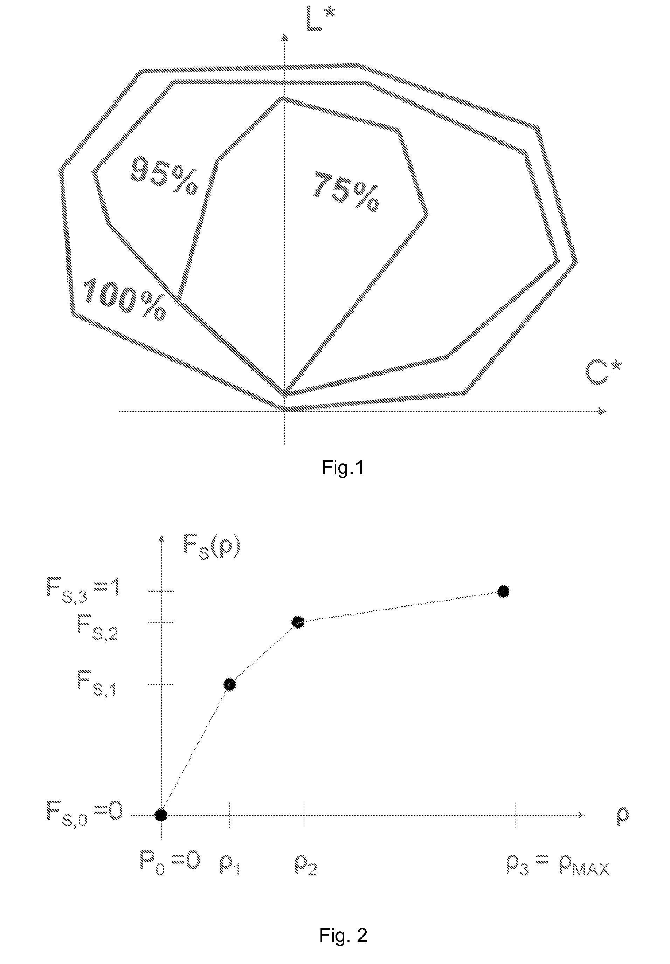

From the set of source colors of interest in L*a*b* space and their specific distribution in this color space, a hierarchically organized set of source gamut boundary descriptions (source GBDs) is generated according to the following method. This set of source GBDs comprises at least one but typically more than one complete gamut boundary descriptions (GBD), in this embodiment three. Figure 1 shows an example of three source GBDs, GBD-S$_1$, GBD-S$_2$, GBD-S$_3$, more precisely the 2D slice of these source GBDs in the L*C* space. Each GBD contains a certain percentage of the source colors of interest according to their distribution. In the example of figure 1, GBD-S$_1$ contains $P_{S,1}$=75% of the source colors of interest, GBD-S$_2$ contains $P_{S,2}$=95% of the source colors of interest, and GBD-S$_3$ contains $P_{S,3}$=100% of the source colors of interest. GBD-S$_1$ is included into GBD-S$_2$ and GBD-S$_2$ is included into GBD-S$_3$. Several GBDs may share parts of their surface for reasons of data size, such as shown for the 75% and 95% GBDs. If $P_{S,3}$ <100%, a source GMD-S$_{100\%}$ is added that contains 100% of the source colors of interest. Another source GMD-S$_{CD}$ may be added that represents the actual source color gamut of the source color device.

The set of source GBDs is generated from the set of source colors of interest by the following steps:

1- The number J of GBD and their associated color percentage P-S$_j$ is determined manually, for example 3 GBD

with example P-S$_1$=75%, P-S$_2$=95% and P-S$_3$=100% of source colors of interest.

2- For each of the GBDs, the following steps are carried out:

2-a) The mapping color space is represented in spherical coordinates around a given center $L_0^*, a_0^*, b_0^*$, for example $L_0^* = 50, a_0^* = 0, b_0^* = 0$. The spherical coordinates $\rho, \phi, \vartheta$ of any color, whatever it is a source color or a target color, are defined as follows around this center in this mapping color space :

$a^*$ = p sin$\phi$ cos$\vartheta$
$b^*$ = p sin$\phi$ sin$\vartheta$

$L^*$ = p cos$\phi$ + $L_0^*$

2-b) The mapping color space is then organized into spherical segments around the center $L_0^*, a_0^*, b_0^*$ with preferentially equal solid angles, for example 400 segments (N=M=20) approximated as follows:

$$n\frac{\pi}{N} \le \phi < (n+1)\frac{\pi}{N} \quad ; \quad n = 0..N-1$$

$$m\frac{2\pi}{M} \le \vartheta < (m+1)\frac{2\pi}{M} \quad ; \quad m = 0..M-1$$

2-c) In each spherical segment, only the given percentage P$_{S,j}$ ($1 \le j \le 3$) of the source colors of interest is retained having the smallest distance $\rho_S$ from the center $L_0^*, a_0^*, b_0^*$.

2-d) From the retained colors corresponding to the percentage P-S$_j$, a convex hull is calculated according to any well-known algorithm for example an incremental convex hull algorithm, then generating the corresponding source GBD-S$_j$.

Other coordinate systems than spherical coordinates can be chosen. For example, instead of choosing a single center point $L_0^*, a_0^*, b_0^*$, multiple points on the L* axis can be chosen and spherical-like segments can be defined starting from portions of the L* axis into all directions of the color space. Another possibility is cylindrical coordinate systems cutting the color space into slices and defining two cylindrical coordinates for each slice.

As an example of a well-known algorithm for the incremental generation of a convex hull from a set of retained colors points in a color space, the following steps are carried out:

1. Create a first hull from any four retained source colors;
2. Take a new retained source color;
3. If the new retained source color is inside the first hull, go on with step 2;
4. If the new retained source color is outside the first hull, delete all triangles from the hull that are visible by the new retained source color;
5. Create new triangles including the new retained source color to close the hull, then generating a new hull;
6. If not all retained source colors have been processed, go on with step 2.

Other convex hull algorithms can be used such as quick hull algorithm, gift warp algorithm or divide and conquer algorithm.

**3 - Generation of a hierarchically organized set of target gamut boundary descriptions : GBD-T$_1$, GBD-T$_2$, GBD-T$_3$.**

In order to generate a set of target GBDs from the set of target colors of interest with its given target colors distribution, the same method is used as described above for the generation of the set of source GBDs from the set of source colors of interest with its given distribution.. If $P_{T,3} < 100\%$, a target GMD-$T_{100\%}$ is added that contains 100% of the target colors of interest. Another target GMD-$T_{CD}$ may be added that represents the actual target color gamut of the target color device.

Note :

In a variation, at least one of the set of source GBDs and target GBDs is not extracted from given set(s) of colors of interest, but determined manually directly by an operator.

In another variation, at least one of the set of source GBDs and target GBDs is not extracted from given set(s) of colors of interest but generated from the gamut of a reference display. The reference gamut display is used as 100% GBD. Several more GBDs are generated by reducing the display gamut in a regular way using morphological operations. For example, a 90% GBD is generated by reducing volume by 10%. The reduction can be uniform in color space. Another possibility is to use weigh function. The volume reduction is stronger where the weight function is large. The weight function can be derived from the distance to the black point of the gamut in order to consider the human visual system.

Each of a hierarchically organized set of source and target gamut boundary descriptions (GBD) is for example constructed as follows. A hierarchically organized set of GBDs contains three sets of different elements:

- Gamut Instances (GI),
- facets,
- vertices.

A single GBD is described by vertices and triangular facets in CIEXYZ color space. Each facet is defined by the indexes of three vertices.

A Gamut Instance (GI) is a group of facets building all together a valid Gamut Boundary Description (GBD). A GI is defined by at least four indices of facets. Each GI is valid Gamut Boundary Description (GBD). Two GIs differ in the percentage of probability of colors from the set of colors from interest they contain.

The binary format of the hierarchically organized set of GBDs is shown in the table 1 :

Table 1

| Byte # (hex) | Description |
|---|---|
| 00 | Basic header |
| 04 + VSIZE | Extended header |
| ID_GI | Gamut Instances (GI) |
| ID_F | Facets |
| ID_V | Vertices |

**Basic header:** The binary format of the hierarchically organized set of GBDs starts with a basic header that contains a minimum of gamut information. The basic header is preferably compatible to High Definition Multimedia Interface (HDMI) gamut-related metadata according to table 2.

Table 2

| Byte # (hex) | Size (bytes) | Symbol | Description | | | | | | | | Values |
|---|---|---|---|---|---|---|---|---|---|---|---|
| | | | 7 | 6 | 5 | 4 | 3 | 2 | 1 | 0 | |
| 00 | 1 | N | FF | FM | ID | ID_PRECISION | | ID_SPACE | | | FF = 0b0 (1bit) FM = 0b0 (1 bit) ID = 0b1 (1 bit) |

(continued)

| Byte # (hex) | Size (bytes) | Symbol | Description | | | | | | Values |
|---|---|---|---|---|---|---|---|---|---|
| | | | | | | | | | ID_ PRECISION (2 bits): 0b00: $N$=8 bits 0b01: $N$=10 bits 0b10: $N$=12 bits ID_SPACE (3bits): 0b000 ITU-R BT.709 RGB 0b001 xvYCC-601 (IEC 61966-2-4 -SD) YCbCr 0b010 xvYCC-709 (IEC 61966-2-4 -HD) YCbCr 0b011 XYZ encoding 0b100 IEC 61966-2-5 0b101 reserved 0b110 reserved 0b111 reserved |
| 02 | 1 | | Number_Vertices_H | | | | | | 0h00 |
| 03 | 1 | | Number_Vertices_L | | | | | | 0h03 |
| 04 | VSIZE | | Packed basic vertices data | | | | | | See below |

The FF and FM bits are the Format_Flag and Facet_Mode flags and should be zero. The ID flag is usually set to one indicating the presence of data after the basic header.

ID_PRECISION indicates how many bits are used per color channel in order to define the coordinates of a vertex in color space. The number of bits shall be one of $N$=8 bits, $N$=10 bits, and $N$=12 bits.

ID_SPACE indicates which color space is used in order to define the coordinates of vertices. Each color space has three color channels. ID_SPACE shall be one of

- ITU-R BT.709, RGB space, encoding according to SMPTE 274M,
- xvYCC-601, YCbCr space, encoding according to IEC 61966-2-4 - SD,
- xvYCC-709, YCbCr space, encoding according to IEC 61966-2-4 - HD.

The choices :

- XYZ encoding,
- IEC 61966-2-5

are reserved for future use and shall not be used.

The packed basic vertices data define four vertices in color space that shall indicate black, red, green and blue of the actual color gamut. When these vertices are expressed as vectors $V_{BLACK}, V_{RED}, V_{GPEEN}, V_{BLUE}$ in CIEXYZ color space, four more vectors $V_{MAGENTA} = V_{RED} + V_{BLUE} - V_{BLACK}$, $V_{CYAN}$ $V_{GREEN} + V_{BLUE} - V_{BLACK}$, $V_{YELLOW}$ $V_{RED} + V_{GREEN}$ $V_{BLACK}$, $V_{WHITE} = V_{RED} + V_{GREEN} + V_{BLUE} - 2 V_{BLACK}$, can be calculated giving a distorted cube in CIEXYZ color space. This cube should be an approximation of the actual color gamut.

VSIZE is the size of packed basic vertices data and is defined according to table 3:

Table 3

| N | VSIZE |
|---|-------|
| 8 | 12 |
| 10 | 15 |
| 12 | 18 |

**Packing of vertices:** The packed basic vertices data contains encoded color values, in this order, either RGB or YCbCr or XYZ. The vertices are listed in the order black, red, green, red. When N=8, the 9 color values are coded into 12 bytes. When N=10 or N=12, the vertices are packed according to one of the tables 4 to 5, respectively.

Table 4

| Relative byte # (hex) | Size (bytes ) | Description | | | | | | | |
|-----------------------|---------------|---|---|---|---|---|---|---|---|
| | | 7 | 6 | 5 | 4 | 3 | 2 | 1 | 0 |
| 00 | 1 | A_high | | | | | | | |
| 01 | 1 | A_low | | B_high | | | | | |
| 02 | 1 | B_low | | | C_high | | | | |
| 03 | 1 | C_low | | | | | D_high | | |
| 04 | 1 | D_low | | | | | | | |

Table 5

| Relative byte # (hex) | Size (bytes) | Description | | | | | | | |
|-----------------------|--------------|---|---|---|---|---|---|---|---|
| | | 7 | 6 | 5 | 4 | 3 | 2 | 1 | 0 |
| 00 | 1 | A_high | | | | | | | |
| 01 | 1 | A_low | | B_high | | | | | |
| 02 | 1 | B_low | | | | | | | |

**Extended header:** The extended header follows the basic header and is defined according to table 6.

Table 6

| Byte # (hex) | Size (bytes) | Symbol | Description | Values |
|--------------|--------------|--------|-------------|--------|
| VISZE + 04 | 2 | ID_GI | Offset to Gamut Instances (GI) | [0;0hFFFF ] |
| VISZE + 06 | 2 | | Reserved | 0h0000 |
| VISZE + 08 | 2 | | Reserved | 0h0000 |

(continued)

| Byte # (hex) | Size (bytes) | Symbol | Description | Values |
|---|---|---|---|---|
| VISZE + 0A | 2 | ID_F | Offset to facets | [0;0hFFFF ] |
| VISZE + 0C | 2 | ID_V | Offset to vertices | [0;0hFFFF ] |
| VISZE + 0E | 1 | | Reserved | 0h00 |
| VISZE + 0F | 1 | | Reserved | 0h00 |
| VISZE + 10 | 1 | | Reserved | 0h00 |
| VISZE + 11 | 2 | | Reserved | 0h0000 |
| VISZE + 13 | 1 | $P$ | Number of levels of color population | $1 \le P \le 128/K$ |
| VISZE + 14 | 1 | $2Q_0$ | Double of percentages of gamut colors | [0;200] |
| VISZE + 15 | 1 | $2Q_1$ | Double of percentages of gamut colors | [0;200] |
| | | : | : | |
| VISZE + 14 + P - 1 | 1 | $2Q_{P-1}$ | Double of percentages of gamut colors | [0;200] |
| VISZE + 14 + P | 1 | | Reserved | 0h00 |

16 bit integer or address values are encoded into 2 bytes with the MSBs in the first bye and the LSBs in the second byte.

ID_GI, ID_F and ID_V give the offset in bytes from the beginning of binary format of the hierarchically organized set of GBDs to the beginning of Gamut Instances, facets and vertices data, respectively.

$P$ indicates the number of alternative GIs populated by different percentages of colors of the actual color gamut. The Gamut ID metadata contains at least P GIs. Each GI is marked individually with a population level (0,1,...,P-1), see below.

$2Q_0 ...2Q_{P-1}$ are the doubles of the percentages $Q_0... Q_{P-1}$ of colors associated to the population levels (0,1,..., P-1). A percentage shall approximately indicate how many percent of colors (0..100) of the actual color gamut are contained in the volume described by a GI of the corresponding population level. Percentages can be defined in steps of 0.5 points.

**Gamut Instances:** The hierarchically organized set of GBDs contains one or more descriptions of the color gamut, either source or target gamut. One single description is called Gamut Instance (GI). A user of the binary format of the hierarchically organized set of GBDs may use any one or any number of GIs of the hierarchically organized set of GBDs. The GIs are defined by a list of GIs from byte number ID_GI on according to table 7. The order in the list is arbitrary but fixed.

Table 7

| Byte # (hex) | Size (bytes) | Symbol | Description | Values |
|---|---|---|---|---|
| ID_GI | 1 | I | Total number of Gamut Instances (GI) | $I \ge P$ |
| ID_GI + 01 | $2 + \lceil F_0 \lceil ld(F) \rceil /8 \rceil$ | | Definition of GI no. 0 | see below |
| ID_GI + 01 +02 + $\lceil F_0 \lceil ld(F) \rceil /8 \rceil$ | $2 + \lceil F_1 \lceil ld(F) \rceil /8 \rceil$ | | Definition of GI no. 1 | see below |
| | | : | : | |
| ID_GI + 01 + $\sum_{i=0}^{I-2} \left(02 + \lceil F_i \lceil ld(F) \rceil \right)$ | $2 + \lceil F_{I-1} \lceil ld(F) \rceil /8 \rceil$ | | Definition of GI no. I-1 | see below |

I is the number of GIs and shall be equal or greater than P. Each GI is defined according to table 8 :

Table 8

| Relative byte # (hex) | Size (bytes) | Symbol | Description | Values |
|---|---|---|---|---|
| 00 | 1 | | Reserved | 0h00 |
| 01 | 2 | | Reserved | 0h0000 |
| 03 | 1 | | Reserved | 0h00 |
| 04 | 1 | $P_i$ | Level of color population of this GI | $0 \leq P_i \leq P - 1$ (*P* see before) |
| 05 | 1 | $F_i$ | Number of facets referenced by this GI | $1 \leq F_i \leq F$ (*F* see below) |
| 06 | $\lceil F_i \lceil ld(F) \rceil / 8 \rceil$ | | Indices of referenced facets | *[0;F-1]* Must be valid indices of facets, F see below |

$P_i$ is the population level of the i-th GI. The i-th GI shall contain approximately $Q_{Pi}$ percent of colors of the actual color gamut. Different GIs with same population level shall contain approximately the same percentage of colors of the actual color gamut. An i-th GI shall contain at least all colors that are contained a j-th GIs having $P_j = P_i + 1$, of such a j-th GIs exists.

$F_i$ is the number of facets that are referenced by the *i*-th GI. All referenced facets describe together a GBD.

The indices of the facets are packed into bytes. Each index of a facet takes *ld*(*F*) bits. Packing is organized GI wise, i.e. the first facet index of a GI always starts at the beginning of a byte.

An example of packing is given in table 9 for the case of *I*=2 Gamut Instances (GI) each using $F_0 = F_1 = 4$ facets from a total of F=6 facets. Each GI takes $\lceil (\lceil ld(F) \rceil F_i)/8 \rceil = \lceil (\lceil ld(6) \rceil 4)/8 \rceil = 2$ bytes for the indexes of the facets. Packing is detailed in table 9.

Table 9

| Byte # (hex) | Size | Value (binary) | | | | | | | |
|---|---|---|---|---|---|---|---|---|---|
| | | 7 | 6 | 5 | 4 | 3 | 2 | 1 | 0 |
| ID_GI | 1 | 0b00000010 | | | | | | | |
| ID_GI + 01 | 1 | 0b0 | | | | | | | |
| ID_GI + 02 | 1 | 0b0 | | | | | | | |
| ID_GI + 03 | 1 | 0b0 | | | | | | | |
| ID_GI + 04 | 1 | 0b0 | | | | | | | |
| ID_GI + 05 | 1 | 0b0 | | | | | | | |
| ID_GI + 06 | 1 | 0 (MSB) | | | | | | | |
| ID_GI + 07 | 1 | 0b100 (LSB) | | | | | | | |
| ID_GI + 08 | 1 | 1. index | | | 2. index | | | 3. index MSBs | |
| ID_GI + 09 | 1 | 3.i. LSB | 4. index | | | Unused | | | |
| ID_GI + 0A | 1 | 0b0 | | | | | | | |
| ID_GI + 0B | 1 | 0b0 | | | | | | | |
| ID_GI + 0C | 1 | 0b0 | | | | | | | |
| ID_GI + 0D | 1 | 0b0 | | | | | | | |
| ID_GI + 0E | 1 | 0 (MSB) | | | | | | | |
| ID_GI + 0F | 1 | 0b100 (LSB) | | | | | | | |
| ID_GI + 10 | 1 | 1. index | | | 2. index | | | 3. index MSBs | |
| ID_GI + 11 | 1 | 3.i. LSB | 4. index | | | Unused | | | |

LSB is least significant bit and MSBs is most significant bits.

**Facets:** The facets are defined by a list of facets from byte number ID_F on according to table 10. The order in the list is arbitrary but fixed.

Table 10

| Byte # (hex) | Size | Sym bol | Description | Values |
|---|---|---|---|---|
| ID_F | 2 | F | Total number of Facets | $1 < F < 65535$ |
| ID_F+02 | $\lceil 3F\lceil Id(V)\rceil/8\rceil$ | | 3F indices of Vertices | *[0; V-1]* Must be a valid indices of Vertices |

F is the total number of facets of the binary format of hierarchically organized system of GBDs. For each facet, three indices of vertexes are indicated, in total 3F indices.

The indices of the vertices of all facets are packed into bytes. Each index of a facet takes $Id(V)$ bits, for $V$ see below.

An example of packing is given for the case of $F$ = 4 facets and $V$ = 4 vertices. Each index of a facet takes $Id(V)$ = 2 bits. All indices take $\lceil 3F\lceil Id(F)\rceil/8\rceil$=3 bytes.

Packing is detailed in table 11.

Table 11

| Byte # (hex) | Size | Value | | | | | | | |
|---|---|---|---|---|---|---|---|---|---|
| | | Bits | | | | | | | |
| | | 7 | 6 | 5 | 4 | 3 | 2 | 1 | 0 |
| ID_F | 2 | 0h0004 | | | | | | | |
| ID_F + 02 | 1 | F0 index0 | | F0 index 1 | | F0 index2 | | F1 index0 | |
| ID_F + 03 | 1 | F1 index1 | | F index2 | | F2 index0 | | F2 index1 | |
| ID_F + 04 | 1 | F2 index2 | | F3 index0 | | F3 index 1 | | F3 index2 | |

**Vertices:** The vertices are defined by a list of vertices from byte number ID_V on, see table 12. The order in the list is arbitrary but fixed.

Table 12

| Byte # (hex) | Size | Symbol | Description | Values |
|---|---|---|---|---|
| ID_V | 2 | V | Total number of Vertices | $1 < V < 65535$ |
| ID_V+04 | $\lceil 3VN/8\rceil$ | | 3 V encoded color values defining V vertices | According to color encoding |

Hereby is $\lceil \bullet \rceil$ the operation that rounds to the next upper integer.

V is the total number of vertices of Gamut ID metadata (not counting the four basic vertices of the basic header).

## 4 - Calculation of a cumulative source color distribution function $F_S(\rho_S)$ from the set of source GBDs : GBD-$S_1$, GBD-$S_2$, GBD-$S_3$.

For the preparation of the above-mentioned first step of pre-mapping, for each mapping trajectory associated with an anchor point, and starting from this anchor point in one direction, a cumulative source color distribution function $F_S(\rho_S)$ is calculated as explained below as a monotonous function of the distance $\rho_S$, measured from this anchor point, of a source color belonging to this mapping trajectory such that, at the intersection of said mapping trajectory with any said source gamut boundary descriptions GBD-$S_j$ associated with its cumulative probability $P_{S,j}$, then $F_S(\rho_{S-inter-GBD-Sj})$

= $P_{S,j}$, while $\rho_{S-inter-GBD-Sj}$ is the distance between center $L_0^*, a_0^*, b_0^*$ and the source gamut boundary description GBD-$S_j$ along this mapping trajectory.

Here, the mapping trajectories are straight lines and there is only one common anchor point corresponding to the center $L_0^*, a_0^*, b_0^*$ of the spherical coordinate system. The invention is not restricted to algorithms with a single anchor point. Other mapping lines with multiple anchor points can be chosen, for example multiple anchor points lying in an interval on the L* axis.

This cumulative color distribution function $F_S(\rho_S)$ indicates the probability of source colors of interest in the interval $[0;\rho_S]$ and is linked to the above-mentioned color distribution $f_S(u)$ by the equation $F_S\left(\rho_S\right) = \int_0^{\rho_S} f_S(u).du$ .

For each mapping line, a cumulative source color distribution function $F_S(\rho_S)$ is calculated from the set of source GBDs as follows.

For each mapping line starting from its anchor point in one direction, the intersections of the mapping line with the source GBD-$S_1$, GBD-$S_2$, GBD-$S_3$ are determined. If the source GBDs are represented by facets, the intersections are found by testing all facets of the GBD. If the intersection of this mapping line with the GBD-$S_1$ that is associated with a cumulative probability $P_{S,1}$, has a distance $\rho_{S\text{-}inter\text{-}GBD\text{-}S1}$, then the value of this cumulative color distribution function for $\rho_S = \rho_{S\text{-}inter\text{-}GBD\text{-}S1}$ is $F_S(\rho_S) = P_{S,1}$. If the intersection of this mapping line with the GBD-$S_2$ that is associated with a cumulative probability $P_{S,2}$, has a distance $\rho_{S\text{-}inter\text{-}GBD\text{-}S2}$, then the value of this cumulative color distribution function for $\rho_S = \rho_{S\text{-}inter\text{-}GBD\text{-}S2}$ is $F_S(\rho_S) = P_{S,2}$. If the intersection of this mapping line with the GBD-$S_3$ that is associated with a cumulative probability $P_{S,3}$, has a distance $\rho_{S\text{-}inter\text{-}GBD\text{-}S3}$, then the value of this cumulative color distribution function for $\rho_S = \rho_{S\text{-}inter\text{-}GBD\text{-}S3}$ is $F_S(\rho_S) = P_{S,3}$. Let fix $\rho_{S\text{-}inter\text{-}GBD\text{-}0}$=0 and $P_{S,0}$= 0. The distances $\rho_{S\text{-}inter\text{-}GBD\text{-}Sj}$, $0 \leq j \leq J$ are stored.

The source cumulative color distribution function $F_S(\rho_S)$ is constructed by linear interpolation of the pairs $(\rho_{S\text{-}inter\text{-}GBD\text{-}Sj}, P_{S,j})$, for $0 \leq j \leq J$, where J=3. In this sample implementation, linear piece-wise interpolation is used as follows:

$$F_S\left(\rho_S\right) = P_{S,j-1} + \frac{P_{S,j} - P_{S,j-1}}{\rho_{S-\text{int}er-GBD-Sj} - \rho_{S-\text{int}er-GBD-S(j-1)}} \left(\rho_S - \rho_{S-\text{int}er-GBD-S(j-1)}\right)$$

$$\forall \quad \rho_{S-\text{int}er-GBD-S(j-1)} \leq \rho_S < \rho_{S-\text{int}er-GBD-Sj} \qquad \forall \quad 1 < j \leq J$$

Figure 2 illustrates an example for the construction of the source cumulative color distribution function. On this figure, the distances between the anchor point and the intersections of the mapping line with the different GBDs: GBD-$S_1$, GBD-$S_2$, GBD-$S_3$ are respectively referenced $\rho_0$ =0,$\rho_1$,$\rho_2$,$\rho_3$ = $\rho_{max}$ *JPB'answer: only specific references for the figure*. The corresponding cumulative probability values $P_{S,0}$, $P_{S,1}$, $P_{S,2}$, $P_{S,3}$ are respectively 0%, 75%, 95% and 100%.

If $P_{S,3}$ <100%, then the source cumulative color distribution function $F_S(\rho_S)$ is linearly extrapolated in order to include the point $(\rho_{S\text{-}inter\text{-}GBD\text{-}100\%}, 100\%)$, where $\rho_{S\text{-}inter\text{-}GBD\text{-}100\%}$ is the distance of the intersection of the mapping line with the GBD-100% that is associated with a cumulative probability of 100% of the source colors of interest.

Other interpolation methods, for example polynomial or splines interpolation can be used. The interpolation has to take into account that cumulative color distribution functions are strictly monotonous.

If the source is not described by a set of a plurality of GBDs or if the source is described as a single GBD, no source cumulative color distribution function is calculated.

In a variation, the cumulative color distribution function is calculated in 3D color space instead of being calculated, as described above, in the 2D slices of the source GBDs. The spherical coordinate system described above with center $L_0^*, a_0^*, b_0^*$ can be adopted resulting in a cumulative color distribution function $F_{3D}(\rho,\phi,\vartheta)$. The cumulative color distribution function can be calculated as follows. The mapping color space is organized into spherical segments with preferentially equal solid angle, for example the 400 segments (N=M=20) already described above with the representative values :

$$\phi_n = (n + 0.5)\frac{\pi}{N} \quad ; \quad n = 0..N-1$$

$$\vartheta_n = (m + -.5)\frac{2\pi}{M} \quad ; \quad m = 0..M-1$$

For each mapping line with coordinates , the 3D cumulative color distribution function $F_{3D}(\rho,\phi,\vartheta)$ is then obtained from the 1D cumulative color distribution function as follows: $F_{3D}(\rho,\phi_n,\vartheta_n) = F(\rho)$.

**5 - Calculation of a cumulative target color distribution function $F_T(\rho_T)$ from the set of target GBDs : GBD-T$_1$, GBD-T$_2$, GBD-T$_3$.**

For the preparation of the above-mentioned third step of post-mapping, for each mapping trajectory associated with an anchor point and starting from this anchor point in one direction, a cumulative target color distribution function $F_T(\rho_T)$ is calculated as a monotonous function of the distance $\rho_T$, measured from the anchor point, of a target color belonging to this mapping trajectory such that, at the intersection of said mapping trajectory with any said target gamut boundary descriptions GBD-T$_j$, associated with its cumulative probability $P_{T,J'}$, then $F_T(\rho_{T-inter-GBD-Tj'}) = P_{T,j'}$. Such calculation may be performed as the calculation described above of the cumulative source color distribution function $F_S(\rho_S)$ from the set of source GBDs : GBD-S$_1$, GBD-S$_2$, GBD-S$_3$. If the target is not described by a set of a plurality of GBDs or if the target is described as a single GBD, no target cumulative color distribution function is calculated.

**6 - Pre-mapping step of source colors to map.**

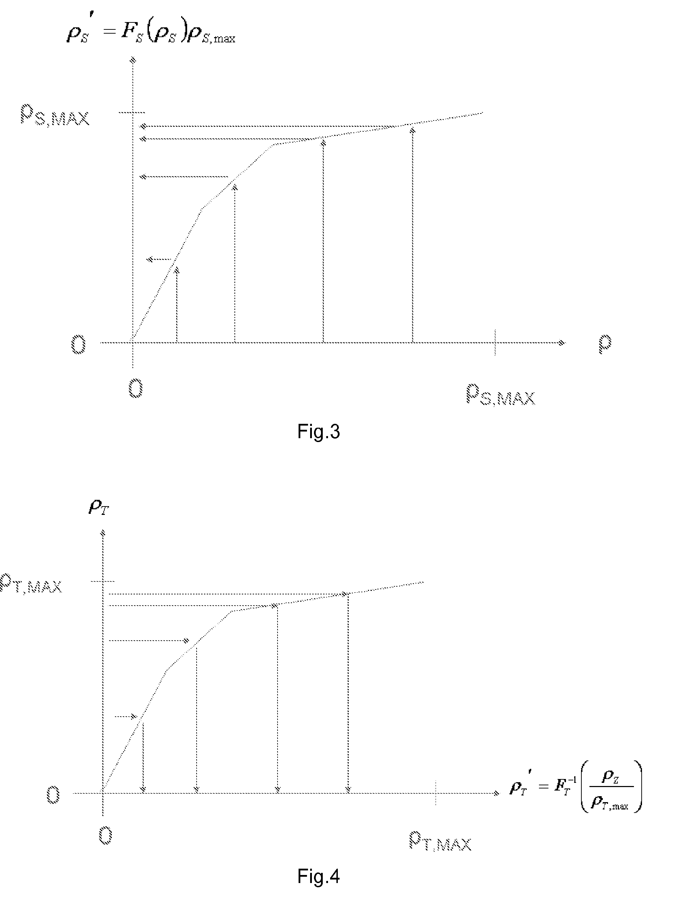

The source colors to map may be different from the source colors of interest. Each source color to map belongs to a mapping line anchored to an anchor point $L_0^*, a_0^*, b_0^*$, and has a distance $\rho_S$ from this anchor point; each source color to map is mapped along its mapping line into a first intermediate color having a distance $\rho'_S$ from this anchor point such that $\rho_S' = F_S(\rho_S) \cdot \rho_{S,max}$, where $\rho_{S,max} = \rho_{S-inter-GBD-S3}$ corresponds to the distance of the color located at the intersection of this mapping line with the largest source gamut boundary description GBD-S$_3$. As illustrated on figure 3, this pre-mapping step aims to make the distribution of pre-mapped source colors flatter than the distribution $f_S(u)$ of the source colors of interest. In this specific embodiment of the invention, the pre-mapping results in a constant distribution. Other variations of this pre-mapping step can be implemented without departing from the invention as far as the distribution of the pre-mapped first intermediate colors that is obtained is closer to a constant distribution than the distribution $f_S(u)$ of the source colors of interest.

If the source is not described by a plurality of GBDs and if no cumulative source color distribution function has been calculated, no pre-mapping is applied and the pre-mapped source color is identical to the source color such that $\rho_S = \rho_S$.

In a variation, a three-dimensional source cumulative color distribution function $F_{S,3D}(\rho,\phi,\vartheta)$ can be used. In this case, pre-mapping aims to make the 3D color distribution of pre-mapped source colors constant or at least more constant than without pre-mapping.

**7 - Main-mapping step of first intermediate colors.**

Each first intermediate color with a distance $\rho'_S$ from the anchor point $L_0^*, a_0^*, b_0^*$ is mapped along the same mapping line that was used for pre-mapping into a second intermediate color with a distance $\rho_T$ from the same anchor point $L_0^*, a_0^*, b_0^*$. Another mapping line can be used and/or another anchor point can be used. For example, the pre-mapping may use a single anchor point in order to define mapping lines and the main-mapping may use multiple anchor points along the L* axis to define mapping lines, or vice versa.

Montag and Fairchild describe in their paper entitled "Gamut mapping: Evaluation of chroma clipping techniques for three destination gamuts" published in 1998 at the IS&T/SID Sixth Color Imaging Conference in Scottsdale, four mapping techniques: scaling-clipping, knee-function mapping, Gentile's mapping, and three segment mapping.

In this specific embodiment of the invention, the three segments mapping which is defined a one-dimensional function mapping of $\rho'_S$ to $\rho_T$ using three segments:

- a first segment having a slope of one,
- a last segment being a hard clipping, and

- a middle segment connecting linearly the other two segments.

The mathematic formula of the mapping function is then :

$$\rho_T = \begin{cases} \rho'_S & 0 \le \rho'_S \le \rho_{S,\inf lection} \\ \dfrac{(\rho_{T,\max} - \rho_{S,\inf lection})(\rho'_S - \rho_{S,\inf lection})}{\rho_{S,clipping} - \rho_{S,\inf lection}} & if \quad \rho_{S,\inf lection} < \rho'_S \le \rho_{S,clipping} \\ \rho_{T,\max} & \rho_{S,clipping} < \rho'_S \le \rho_{S,\max} \end{cases}$$

where $\rho_{S,\max}$ is the maximum distance value of the first intermediate colors, and $\rho_{T,\max}$ is the maximum distance value of the second intermediate colors.

This method has two parameters:

- $\rho_{S,\inf lection}$ which is the distance from the anchor point where the first linear function (of slope one) stops and the middle segment begins,
- $\rho_{S,clipping}$ is the distance from the anchor point where the middle segment stops and the last segment of hard clipping begins; this distance is the so-called cut off value for clipping.

Other known mapping methods can be used without departing from the invention as soon as all mapped colors are inside the target gamut, i.e. **GBD-T$_3$.** This is ensured in the above example since all distances $\rho_T$ after main-mapping are smaller or equal to $\rho_{T,\max}$.

**8 - Post-mapping step of second intermediate colors.**

Each second intermediate color with a distance $\rho_T$ is mapped along its mapping line anchored to its anchor point $L_0^*, a_0^*, b_0^*$ into a target color with a distance $\rho'_T$, such that $\rho_T' = F_T^{-1}\left(\dfrac{\rho_T}{\rho_{T,\max}}\right)$. $\rho'_{T,\max}$ corresponds to the distance $\rho_{T\text{-}inter\text{-}GBD\text{-}T3}$ of the color located at the intersection of this mapping line with the largest target gamut boundary description GBD-T$_3$, and $F_T^{-1}$ is the inverse function of the cumulative target color distribution function $F_T(\rho_T)$. As illustrated on figure 4, this post-mapping step is designed in a way that it makes the distribution of the post-mapped target colors closer to the distribution $f_T(u)$ of the target colors of interest than before post-mapping operation, in case of second intermediate colors having constant color distribution. In this specific embodiment of the invention, the post-mapping results in a constant color distribution in case of second intermediate colors having constant color distribution. Other variations of this post-mapping step can be implemented without departing from the invention as far as the distribution of the post-mapped colors that is obtained is **closer** to the distribution $f_T(u)$ of the target colors of interest than a constant color distribution in case of second intermediate colors having constant color distribution.

If the target is not described by a plurality of GBDs and if no cumulative target color distribution function has been calculated, no post-mapping is applied and the post-mapped source color is identical to the source color such that $\rho_S = \rho_S$.

In a variation, a three-dimensional target cumulative color distribution function $F_{T,3D}(\rho, \phi, \vartheta)$ can be used. In this case, post-mapping is applied to the second intermediate colors in a way that if the color distribution of second intermediate colors was constant, the color distribution of post-mapped source colors would be equal or closer to the distribution $f_T$ (u) of the target colors of interest than without post-mapping.

The above-described embodiment of the mapping method according to the invention is summarized on the diagram of figure 5, which illustrates more specifically the following steps :

1- A hierarchically organized set of source gamut boundary descriptions is extracted from a set of source colors indicating presence and different probability levels of colors in the mapping color space.

2- A hierarchically organized set of target gamut boundary descriptions is extracted from a set of target colors indicating presence and different probability levels of colors in the same mapping color space ;

3- A source color probability function is extracted from the hierarchically organized set of source gamut boundary descriptions describing the probability of source colors in the mapping color space;

4- A target color probability function is extracted from the hierarchically organized set of target gamut boundary descriptions describing the probability of target colors in the same mapping color space ;

5- A pre-mapping step is defined from the probability of source colors and applied to source colors such that the color probability of pre-mapped source colors in the color space is closer to a constant color probability than before; color probability is then flattened;

6- A main-gamut step mapping is applied to the pre-mapped source colors resulting in second intermediate colors such that all second intermediate colors are inside the largest of the target gamut boundary descriptions.

7- A post-mapping is defined from the probability of target colors and applied to the second intermediate colors such that if the probability of second intermediate colors was constant, the color probability of post-mapped target colors in the color space would be equal or closer to the target color probability function than without post-mapping.

It can thus be appreciated that the mapping method according to the invention improves upon the prior art mapping methods by providing some of the following advantages :

- During content creation, color gamut mapping can be controlled using hierarchically organized systems of source and target gamut boundary descriptions representing color importance;
- During content distribution, color gamut mapping can be controlled using hierarchically organized systems of source and target gamut boundary descriptions expressing color probability or distribution;
- During content reproduction on a display, color gamut mapping can be controlled using hierarchically organized systems of source and target gamut boundary descriptions quantifying color quality.

Each feature disclosed in the description and (where appropriate) the claims and drawings may be provided independently or in any appropriate combination. Features may, where appropriate be implemented in hardware, software, or a combination of the two. Reference numerals appearing in the claims are by way of illustration only and shall have no limiting effect on the scope of the claims. While the present invention is described with respect to particular examples and preferred embodiments, it is understood that the present invention is not limited to these examples and embodiments. Modifications of detail can be made without departing from the scope of the invention. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

**Claims**

1. Method of mapping, in a mapping color space, source colors of a source color device into target colors of a target color device, **characterized in that** it comprises a first step of pre-mapping source colors into first intermediate colors, a second step of main-mapping first intermediate colors into second intermediate colors, and a third step of post-mapping second intermediate colors into target colors,
   wherein,

   - if a set of source colors of interest is defined with a given source distribution $f_S(u)$, and/or if a set of target colors of interest is defined with a given target distribution $f_T(u)$,
   - if the distribution $f_S(u)$ of the source colors of interest is not constant, said pre-mapping of the first step is adapted to get a distribution of the pre-mapped first intermediate colors that is closer to a constant color distribution than said given source distribution $f_S(u)$ of the source colors of interest,
   - if the distribution of the second intermediate colors is constant, said post-mapping is adapted to get a distribution of the post-mapped colors that is closer to said given target distribution $f_T(u)$ of the target colors of interest than a constant color distribution.

2. Method of mapping according to claim 1 **characterized in that:**

   - according to said given source colors distribution $f_S(u)$, source colors of interest are distributed into a plurality of hierarchically organized source gamut boundary descriptions (GBD-$S_1$, GBD-$S_2$, ..., GBD-$S_j$, ..., GBD-$S_J$) of the said source color device, enclosing respectively a cumulative probability ($P_{S,1} < P_{S,2} < ... < P_{S,j} < ... < P_{S,J}$) of said source colors, where, whatever is j such that $1 \leq j \leq J-1$, then GBD-$S_j$ is included into GBD-$S_{j+1}$;
   - according to said given target colors distribution $f_T(u)$, target colors of interest are distributed into a plurality of hierarchically organized target gamut boundary descriptions (GBD-T$_1$, GBD-T$_2$, ..., GBD-T$_{j'}$, ..., GBD-T$_{J'}$) of the said target color device, enclosing respectively a cumulative probability (P$_{T,1}$ < P$_{T,2}$ < ...< P$_{T,j'}$ < ...<P$_{T,J'}$) of said target colors, where, whatever is j' such that $1 \le j' \le J'-1$, then GBD-T$_{j'}$ is included into GBD-T$_{j'+1}$).

3. Method of mapping according to claim 2 **characterized in that** said pre-mapping, main-mapping and post-mapping steps are all performed along mapping trajectories in reference with anchor points, and **in that** :

- for the first step of pre-mapping, for each mapping trajectory associated with an anchor point, a cumulative source color distribution function $F_S(\rho_S)$ is calculated as a monotonous function of the distance $\rho_S$, measured from said anchor point, of a source color belonging to said mapping trajectory such that, at the intersection of said mapping trajectory with any said source gamut boundary descriptions (GBD-S$_j$) associated with its cumulative probability P$_{S,j}$, then $F_S(\rho_{S\text{-}inter\text{-}GBD\text{-}Sj}) = P_{S,j}$;
- for the third step of post-mapping, for each mapping trajectory associated with an anchor point, a cumulative target color distribution function $F_T(\rho_T)$ is calculated as a monotonous function of the distance $\rho_T$, measured from said anchor point, of a target color belonging to said mapping trajectory such that, at the intersection of said mapping trajectory with any said target gamut boundary descriptions (GBD-T$_{j'}$) associated with its cumulative probability P$_{T,j'}$, then $F_T(\rho_{T\text{-}inter\text{-}GBD\text{-}Tj'}) = P_{T,j'}$.

4. Method of mapping according to claim 3, **characterized in that,** for each source color to map into a target color along a mapping trajectory with reference to an anchor point, then, if all distance of colors are measured with reference to this anchor point along mapping trajectory :

- during the pre-mapping step, said source color with a distance $\rho_S$ is pre-mapped along said mapping trajectory into a first intermediate color with a distance $\rho'_S$, such that $\rho_S' = F_S(\rho_S) \times \rho_{S,max}$, where $\rho_{S,max} = \rho_{S\text{-}inter\text{-}GBD\text{-}SJ}$ corresponds to the distance of the color located at the intersection of said mapping trajectory with the largest source gamut boundary description (GBD-S$_J$),
- during the main-mapping step, said first intermediate color with a distance $\rho'_S$ is main-mapped along said mapping trajectory into a second intermediate color with a distance $\rho_T$,
- during the post-mapping step, the second intermediate color with a distance $\rho_T$ is post-mapped along said mapping trajectory into a target color with a distance $\rho'_T$, such that $\rho_T' = F_T^{-1}\left( \dfrac{\rho_T}{\rho_{T,\max}} \right)$, where $\rho_{T,max} =$

$\rho_{T\text{-}inter\text{-}GBD\text{-}TJ'}$ corresponds to the distance of the color located at the intersection of said mapping trajectory with the largest target gamut boundary description (GBD-T$_{J'}$), and where $F_T^{-1}$ is the inverse function of the cumulative target color distribution function $F_T(\rho_T)$.

Fig.1

Fig. 2

$$\rho_S' = F_S(\rho_S)\rho_{S,\max}$$

Fig.3

$$\rho_T' = F_T^{-1}\left(\frac{\rho_Z}{\rho_{T,\max}}\right)$$

Fig.4

Fig.5

**European Patent Office**

**EUROPEAN SEARCH REPORT**

Application Number

EP 07 30 1278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 100 256 A (MATSUSHITA ELECTRIC IND CO LTD [JP]) 16 May 2001 (2001-05-16) | 1 | INV. H04N1/60 |
| A | * figures 15,19,21-24 * <br> * paragraphs [0200] - [0281] * | 1-4 | |
| D,A | US 2007/081176 A1 (NEWMAN TODD D [US] ET AL) 12 April 2007 (2007-04-12) <br> * the whole document * | 1-4 | |
| D,A | US 2002/041393 A1 (TAKAHASHI MARIKO [JP] ET AL) 11 April 2002 (2002-04-11) <br> * paragraph [0039] - paragraph [0050]; figures 3,4 * | 1-4 | |
| D,A | US 6 128 407 A (INOUE TAKAHIDE [JP] ET AL) 3 October 2000 (2000-10-03) <br> * column 33, line 11 - column 34, line 7; figure 19 * <br> * claims 1,7 * | 1-4 | |

TECHNICAL FIELDS
SEARCHED      (IPC)

H04N
G06T

The present search report has been drawn up for all claims

| Place of search | Date of completion of the search | Examiner |
|---|---|---|
| The Hague | 11 October 2007 | Beugin, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 07 30 1278

This annex lists the patent family members relating to the patent documents cited in the above-mentioned European search report.
The members are as contained in the European Patent Office EDP file on
The European Patent Office is in no way liable for these particulars which are merely given for the purpose of information.

11-10-2007

| Patent document cited in search report | | Publication date | Patent family member(s) | | Publication date |
|---|---|---|---|---|---|
| EP 1100256 | A | 16-05-2001 | KR | 20010051599 A | 25-06-2001 |
| | | | US | 6995865 B1 | 07-02-2006 |
| US 2007081176 | A1 | 12-04-2007 | NONE | | |
| US 2002041393 | A1 | 11-04-2002 | JP | 3830747 B2 | 11-10-2006 |
| | | | JP | 2002118764 A | 19-04-2002 |
| US 6128407 | A | 03-10-2000 | JP | 3778229 B2 | 24-05-2006 |
| | | | JP | 10243250 A | 11-09-1998 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007081176 A
- US 6128407 A
- US 7064864 B
- US 2006072133 A